# EUROPÄISCHE PATENTSCHRIFT

(11) **EP 0 512 253 B1**
(45) Veröffentlichungstag und Bekanntmachung des Hinweises auf die Patenterteilung: **02.08.1995**
(21) Anmeldenummer: 92105751.9
(22) Anmeldetag: 03.04.1992
(51) Int. Cl.: F16C 29/08, B23Q 11/08

(54) **Abstreifereinheit für ein Linearlagerelement**
Wiper unit for a linear bearing element
Racleur pour un élément de palier linéaire

(30) Priorität: 07.05.1991 DE 4114892
(43) Veröffentlichungstag der Anmeldung: 11.11.1992
(73) Patentinhaber: INA Wälzlager Schaeffler KG, 91063 Herzogenaurach (DE)
(72) Erfinder: Eder, Jean Marie, Woerth (FR); Lambertz, Hans-Reinhard, W-4006 Erkrath 2 (DE); Koschmieder, Hartmut, Dipl.-Ing., W-8520 Erlangen (DE)

(56) Entgegenhaltungen:
- DE-A- 3 432 197
- DE-A- 3 931 806
- DE-C- 2 130 420
- US-A- 1 938 786

## Beschreibung

Die Erfindung betrifft eine Abstreifereinheit für ein Lagerelement, vorzugsweise Wälzlagerelement, das längsbeweglich an der Lauffläche eines Formbauteils gelagert ist und an mindestens einer Stirnseite des Lagerelements mit einem von einer Trägerplatte gehaltenen Abstreiferblech versehen ist, welches für die Entfernung von Verunreinigungen mit einem Endbereich auf der Lauffläche aufliegt.

Aus der DE-C-21 30 420 ist eine Abstreifereinheit für ein Lagerelement bekannt, welches eine ständig dosierte Schmierung des Wälzlagers mit einfachen und billigen Mitteln ermöglicht. Diese Vorrichtung enthält einen Abstreifer aus einem polymeren Werkstoff mit einer Abstreifkante, die bei der hin- und hergehenden Bewegung eines als Rollenumlaufschuh ausgebildeten Lagerelementes die Laufbahn reinigen soll, um Verunreinigungen von dem Wälzlager fernzuhalten. Das Formbauteil kann beispielsweise als Profilschiene ausgeführt sein, wobei der Elastomerabstreifer der Schienenform der Profilschiene mit ihren Laufflächen angepaßt sein kann. Die sich dabei ergebenden Abstreiferlippen sollen gegen heiße Späne und grobe, harte Schmutzpartikel durch eine weitere Vorgesetzte Spaltdichtung aus Metall geschützt werden, die die Profilschiene mit engem Spalt umschließt. Die Spaltdichtung ist dann der Form der Profilschiene anzupassen.

Eine solche Ausführung hat folgenden Nachteil: Mit ihr kann nicht verhindert werden, daß kleine abrasive und/oder heiße Partikel an die abstreifenden Dichtlippen gelangen, diese zerstören und zum Lagerausfall führen. Solche Partikel sind Späne, die während der Arbeit der Werkzeugmaschine entstehen, wovon das Lagerelement ein Teil ist. Ein weiteres Problem ergibt sich für Linearführungen bei solchen Anwendungen, bei denen aus dem Arbeitsprozeß eine harte Schmutzverkrustung der Schienenlaufbahn entsteht, die von den weichen Elastomer- oder Gummidichtlippen nicht abgeschabt werden kann. In solchen Fällen werden pro Laufbahn berührende Metallabstreifer als Einzelelemente angeordnet, die aber bei einer komplizierten Profilschienenform die schwierige Übereckdichtung nicht wirksam lösen können und außerdem eine aufwendige Montage bedingen.

Aus der US-A-19 38 786 ist eine Abstreifereinheit der eingangs genannten Art bekannt, deren Abstreiferblech im Querschnitt winkelförmig ausgeführt und in einem Aufnahmeraum gehalten ist, der sich zwischen dem Lagerelement und der daran angeschraubten Trägerplatte unter Zwischenschaltung von Abstandsringen ergibt. Dieses Abstreiferblech ist hier nicht fest, sondern in geringen Grenzen beweglich gehalten und wird von einer Gruppe von Schraubenfedern auf die Lauffläche gedrückt. Diese Ausführung ist konstruktiv aufwendig.

Der Erfindung liegt die Aufgabe zugrunde, eine gegen heiße Späne und feinste Partikel wirksame und abdichtende Abstreifereinheit für eine Linearlagereinheit zu schaffen, die darüberhinaus die Lauffläche von harten Verkrustungen freischaben kann und auch Formbauteiloberflächen mit bereichsweisen Ausnehmungen, wie Bohrungen, die nicht bündig mit der Oberfläche verschlossen sind, ohne Zerstörung des Abstreiferblechs wirksam reinigen kann. Die Abstreifereinheit soll weiterhin kostengünstig herzustellen und leicht montierbar sein.

Diese Aufgabe wird erfindungsgemäß dadurch gelöst, daß das Abstreiferblech mehrere biegeelastische Zungen aufweist, die vor der Montage des Abstreiferblechs an dem Lagerelement in einer gemeinsamen Ebene liegen und im eingebauten Zustand mit ihren Enden an den zugehörigen Laufflächenabschnitten des Formbauteils federnd anliegen. Dabei können an der auf das Lagerelement gerichteten Seite der Trägerplatte mindestens zwei aneinander anliegende Abstreiferbleche angeordnet sein, deren Zungen sich im ebenen Zustand bereichsweise überdecken oder Spalte freilassen und im montierten, auf das Formbauteil aufgeschobenen Zustand ein gemeinsames geschlossenes Profil bilden. Dadurch wird mit einfachen Mitteln eine im Betrieb dichte und sicher arbeitende Abstreifereinheit geschaffen.

Die Trägerplatte und die Abstreiferbleche können miteinander verklebt sein, so daß sie für die Montage zusammen ein Teil bilden, welches sich leicht handhaben läßt. Eine solche Verklebung kann dadurch erzielt werden, daß die Abstreiferbleche jeweils einseitig mit einer Klebefolie beschichtet sind. Die Montage der Abstreifereinheit an dem Lagerelement erfolgt in einfacher Weise dadurch, daß die Trägerplatte und die Abstreiferbleche fluchtende Bohrungen aufweisen, in welche Schrauben für die Befestigung an dem Lagerelement eingesteckt sind. Die Abstreifereinheit läßt sich so problemlos an dem Lagerelement festschrauben.

Bei der Montage kann mit einer Schraube gleichzeitig ein Schmiernippelträger an der Trägerplatte befestigt werden, so daß die Möglichkeit besteht, das Lagerelement für seine hin- und hergehende Bewegung auf der Lauffläche des Formbauteils durch einen an dem Schmiernippelträger angebrachten Schmiernippel mit dem erforderlichen Schmierstoff zu versorgen. Zur weiteren Abdichtung von flüssigen oder pastösen Medien kann an dem dem Lagerelement benachbarten Abstreiferblech ein zusätzlicher, eine Abstreifkante aufweisender Abstreifer aus einem polymeren Werkstoff angeordnet sein.

Bei Formbauteilen, deren Oberflächen bereichsweise Ausnehmungen, z. B. Bohrungen aufweisen, die nicht absolut bündig mit der Lauffläche verschlossen sind, wird bei geradliniger Ausführung des vorgespannten Zungenendes dieses teilweise in die Ausnehmung gedrückt und kann bei der weiteren Bewegung an der Bohrungskante verhaken. Die Folge ist eine Zerstörung der Zunge. Für solche Fälle ist es notwendig, die Abstreifkante des Zungenendes so auszuführen, daß das Zungenende während des Überstreichens der Ausnehmung nicht in den Freiraum (die Bohrung) absinkt. Dies kann erfindungsgemäß durch eine konkave Kontur der Zungenkante erreicht werden.

Ausführungsbeispiele der Erfindung sind in der Zeichnung dargestellt und werden im folgenden näher beschrieben. Es zeigen:
- Figur 1: ein an einem Formbauteil angeordnetes Lagerelement mit einer stirnseitigen Abstreifereinheit;
- Figur 2: eine Draufsicht auf die Lagereinheit gemäß Figur 1;
- Figur 3: eine Abstreifereinheit mit zwei Abstreiferblechen und mit Schrauben für die Befestigung an dem Lagerelement;
- Figur 4: einen Schnitt durch die Abstreifereinheit gemäß Linie IV-IV der Figur 3;
- Figur 5: einen vergrößerten Teilschnitt durch eine weitere, an einem Lagerelement befestigte Abstreifereinheit;
- Figur 6: ein der Figur 1 entsprechendes weiteres Lagerelement, dessen obere Zunge eine konkave Ausnehmung aufweist;
- Figur 7: eine Draufsicht auf das Lagerelement nach Figur 6.

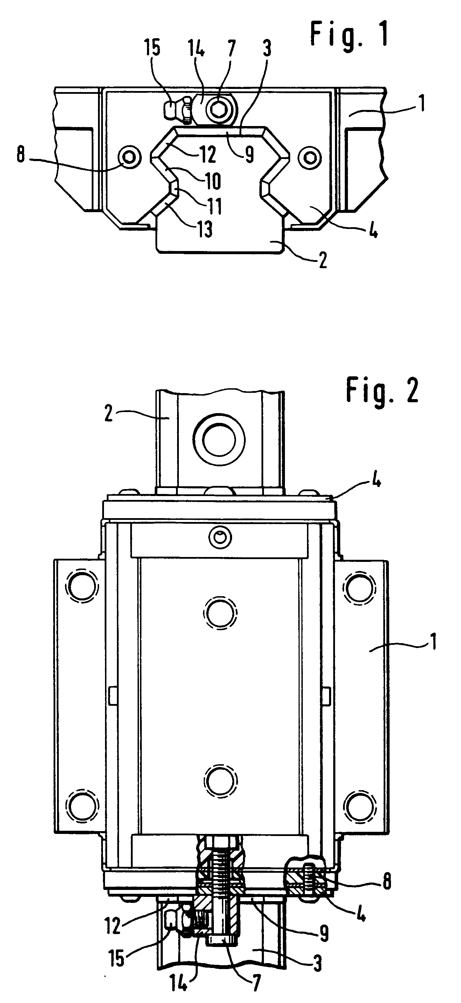

Die Abstreifereinheit nach den Figuren 1 bis 4 der Zeichnung ist an einem als Wagen ausgebildeten Lagerelement 1 montiert, der ein als Führungsschiene ausgebildetes Formbauteil 2 im Bereich von dessen Lauffläche 3 umgibt. Die Abstreifereinheit besteht aus einer Trägerplatte 4, einem daran einseitig angeklebten Abstreiferblech 5 und einem an diesem wiederum angeklebten Abstreiferblech 6. Die Trägerplatte 4 und die Abstreiferbleche 5 und 6 weisen fluchtende Bohrungen auf. Durch diese werden für die Montage Schrauben 7 und 8 hindurchgesteckt und in Gewindebohrungen des Lagerelements eingeschraubt. Dabei befinden sich die beiden Abstreiferbleche 5 und 6 zwischen der Trägerplatte 4 und dem Lagerelement 1.

Jedes Abstreiferblech weist mehrere auf das Formbauteil 2 gerichtete Zungen auf, mit denen die Abschnitte der Lauffläche 3 des Formbauteils während des Betriebes gereinigt werden sollen. So besitzt das Abstreiferblech 5 Zungen 9, 10 und 11, während das Abstreiferblech 6 Zungen 12 und 13 aufweist. Diese Zungen der beiden Bleche bilden miteinander im noch nicht montierten Zustand der Abstreifereinheit entweder Spalte oder sie überdecken sich bereichsweise. In diesem Zustand befinden sich die Abstreiferbleche 5 und 6 mit ihren Zungen 9 bis 11 bzw. 12 und 13 jeweils in einer Ebene. Nach dem Montieren der Abstreifereinheit an dem Lagerelement 1 und nach dem anschließenden Aufschieben des Lagerelements 1 auf das Formbauteil 2 haben sich alle Zungen mit ihren das Formbauteil 2 an seiner Lauffläche 3 berührenden Enden elastisch um 90° verbogen, so daß diese Zungenenden federnd auf den Abschnitten der Lauffläche 3 aufliegen und bei der hin- und hergehenden Bewegung des Lagerelements 1 die Lauffläche 3 von Verunreinigungen befreien. Bei dieser elastischen Verformung der Zungen hat sich dann ein gemeinsames geschlossenes Profil gebildet: Sowohl die Überdeckungen als auch die Spalte zwischen den Zungen bestehen nicht mehr, weil die Zungen für ihre abdichtende Stellung entsprechend der Querschnittsform des Formbauteils 2 dimensioniert worden sind.

Im Ausführungsbeispiel ist die Schraube 7 länger ausgeführt, als die Schrauben 8, damit mit ihr gleichzeitig auch ein Schmiernippelträger 14 für einen Schmiernippel 15 an dem Lagerelement 1 befestigt werden kann.

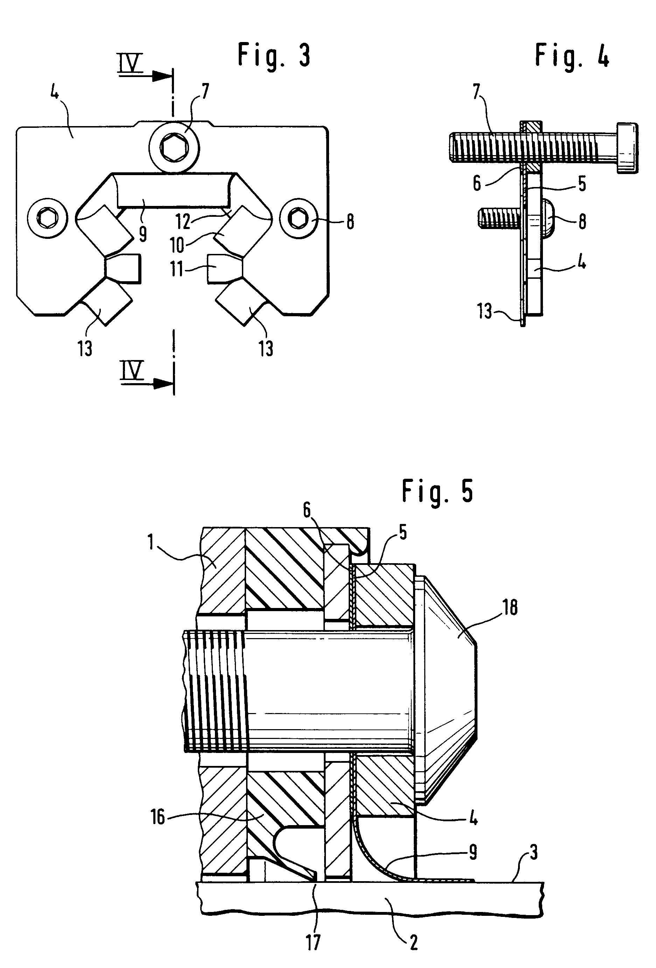

Das Ausführungsbeispiel gemäß Figur 5 weist außer der Trägerplatte 4 und den Abstreiferblechen 5 und 6 noch einen polymeren Abstreifer 16 auf, der mit seiner Abstreifkante 17 auf dem jeweiligen Abschnitt der Lauffläche 3 des Formbauteils 2 entlanggleitet. Dieser Abstreifer 16 befindet sich zwischen dem Lagerelement 1 und der Abstreifereinheit. Die Trägerplatte 4, die Abstreiferbleche 5 und 6 und der polymere Abstreifer 16 sind mit Schrauben 18 an dem Lagerelement 1 befestigt.

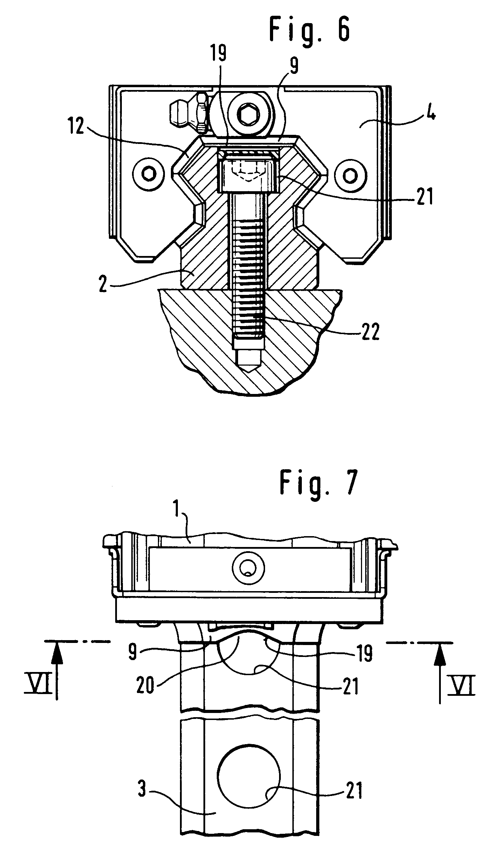

Bei dem Ausführungsbeispiel nach den Figuren 6 und 7 verläuft die Abstreifkante 19 der oberen Zunge 9 nicht geradlinig, sondern die Zunge 9 weist im Bereich ihres auf der Lauffläche 3 aufliegenden Endes eine Ausnehmungen 20 auf. Sie ist hier mit einem konkaven Bereich ausgeführt, so daß das Zungenende beim Überstreichen von Bohrungen 21 des Formbauteils 2 für Befestigungsschrauben 22 nicht in die jeweilige Bohrung 21 hineingedrückt werden kann.

## Patentansprüche

1. Abstreifereinheit für ein Lagerelement, vorzugsweise Wälzlagerelement, das längsbeweglich an der Lauffläche (3) eines Formbauteils (2) gelagert ist und an mindestens einer seiner Stirnseiten mit einem von einer Trägerplatte (4) gehaltenen Abstreiferblech (5) versehen ist, welches für die Entfernung von Verunreinigungen mit einem Endbereich auf der Lauffläche (3) aufliegt, **dadurch gekennzeichnet**, daß das Abstreiferblech (5) mehrere biegeelastische Zungen (9 bis 11) aufweist, die sich vor der Montage der Abstreifereinheit an dem Lagerelement (1) in einer gemeinsamen Ebene befinden und im eingebauten Zustand mit ihren Enden an den zugehörigen Laufflächenabschnitten des Formbauteils (2) federnd anliegen.

2. Abstreifereinheit nach Anspruch 1, **dadurch gekennzeichnet**, daß an der auf das Lagerelement (1) gerichteten Seite der Trägerplatte (4) mindestens zwei aneinander anliegende Abstreiferbleche (5, 6) angeordnet sind, deren Zungen (9 bis 13) sich im ebenen Zustand bereichsweise überdecken oder Spalte frei lassen und im montierten, auf das Formbauteil (2) aufgeschobenen Zustand ein gemeinsames geschlossenes Profil bilden.

3. Abstreifereinheit nach Anspruch 2, **dadurch gekennzeichnet**, daß die Trägerplatte (4) und die Abstreiferbleche (5, 6) zur Montageerleichterung miteinander verklebt sind.

4. Abstreifereinheit nach Anspruch 3, **dadurch gekennzeichnet**, daß die Abstreiferbleche (5, 6) jeweils einseitig mit einer Klebefolie beschichtet sind.

5. Abstreifereinheit nach einem der vorhergehenden Ansprüche, **dadurch gekennzeichnet**, daß die Trägerplatte (4) und die Abstreiferbleche (5, 6) fluchtende Bohrungen aufweisen, in welche Schrauben (7, 8, 18) für die Befestigung an dem Lagerelement (1) eingesteckt sind.

6. Abstreifereinheit nach Anspruch 5, **dadurch gekennzeichnet**, daß mit einer Schraube (7) gleichzeitig ein Schmiernippelträger (14) an der Trägerplatte (4) befestigt ist.

7. Abstreifereinheit nach einem der vorhergehenden Ansprüche 2-6, **dadurch gekennzeichnet**, daß an dem dem Lagerelement (1) benachbarten Abstreiferblech (6) ein zusätzlicher, eine Abstreifkante (17) aufweisender Abstreifer (16) aus einem polymeren Werkstoff angeordnet ist.

8. Abstreifereinheit nach einem der vorhergehenden Ansprüche, **dadurch gekennzeichnet**, daß die Abstreifkanten (19) der Zungen (9 bis 13) geradlinig sind.

9. Abstreifereinheit nach einem der vorhergehenden Ansprüche, **dadurch gekennzeichnet**, daß die Abstreifkante einer Zunge (9) bereichsweise einen konkaven Verlauf aufweist.

## Claims

1. Wiper unit for a bearing element, preferably a rolling bearing element, which is slidably mounted on the running face (3) of a shaped part (2) and provided, at at least one of its front ends with a wiper blade (5) which is retained by a supporting plate (4) and whose one end region is in contact with the running face (3) for removing impurities, characterized in that the wiper blade (5) comprises several elastically flexible tongues (9 to 11) which are located in one common plane before the mounting of the wiper unit on the bearing element (1) and whose ends are in resilient contact with respective sections of the running face of the shaped part (2) in the installed state.

2. Wiper unit according to claim 1, characterized in that, on the side of the supporting plate (4) facing the bearing element (1), there are arranged at least two wiper blades (5, 6) bearing against each other whose tongues (9 to 13), in the flat state, partially overlap one another or form gaps, and in the installed state, when pushed onto the shaped part (2), form a common closed profile.

3. Wiper unit according to claim 2, characterized in that, to facilitate mounting, the supporting plate (4) and the wiper blades (5, 6) are glued together.

4. Wiper unit according to claim 3, characterized in that each wiper blade (5, 6) is coated on one side with an adhesive foil.

5. Wiper unit according to one of the preceding claims, characterized in that the supporting plate (4) and the wiper blades (5, 6) comprise aligned bores into which screws (7, 8, 18) are inserted for the fixing on the bearing element (1).

6. Wiper unit according to claim 5, characterized in that a lubricating nipple support (14) is fixed at the same time by one of the screws (7) on the supporting plate (4).

7. Wiper unit according to one of the preceding claims 2 to 6, characterized in that an additional wiper (16) made of a polymeric material and comprising a wiping edge (17) is arranged on the wiper blade (6) adjoining the bearing element (1).

8. Wiper unit according to one of the preceding claims, characterized in that the wiping edges (19) of the tongues (9 to 13) are rectilinear in shape.

9. Wiper unit according to one of the preceding claims, characterized in that the wiping edge of one of the tongues (9) comprises a concave region.

## Revendications

1. Dispositif de raclage pour un élément de palier, de préférence, un élément de palier à roulement, monté coulissant sur la face de coulissement (3) d'un composant préformé (2) et muni, à au moins l'une de ses extrémités frontales, d'une tôle racleuse (5) qui est retenue par une plaque de support (4) et dont une région terminale s'appuie contre la face de coulissement (3) pour en enlever des éléments polluants, caractérisé en ce que la tôle racleuse (5) comprend plusieurs languettes (9 à 11) qui sont élastiquement flexibles et qui, avant le montage de la tôle racleuse sur l'élément de palier (1), se trouvent dans un plan commun et dont les extrémités s'appuient, dans l'état intégré, élastiquement contre les parties associées de la face de coulissement du composant préformé (2).

2. Dispositif de raclage selon la revendication 1, caractérisé en ce qu'au moins deux tôles racleuses (5, 6), l'une en appui contre l'autre, sont agencées sur la face frontale de la plaque de support (4) orientée vers l'élément de palier (1), et en ce que, dans la condition plane, les languettes (9 à 13) de ces tôles racleuses se recouvrent en partie ou laissent des intervalles libres entre elles, tandis que dans l'état monté, quand elles sont poussées sur le composant préformé (2), elles forment un profil commun fermé.

3. Dispositif de raclage selon la revendication 2, caractérisé en ce que, pour faciliter le montage, la plaque de support (4) et les tôles racleuses (5, 6) sont collées entre elles.

4. Dispositif de raclage selon la revendication 3, caractérisé en ce que chaque tôle racleuse (5, 6) est revêtue de l'un côté d'une feuille de collage.

5. Dispositif de raclage selon l'une des revendications précédentes, caractérisé en ce que la plaque de support (4) et les tôles racleuses (5, 6) comprennent des alésages alignés dans lesquels sont insérés des vis (7, 8, 18) pour la fixation sur l'élément de palier (1).

6. Dispositif de raclage selon la revendication 5, caractérisé en ce qu'avec l'une (7) des vis, il est fixé, en même temps, sur la plaque de support (4), un support (14) de raccord de graissage.

7. Dispositif de raclage selon l'une des revendication 2 à 6, caractérisé en ce, que sur la tôle racleuse (6) voisine de l'élément de palier (1), il est agencé un racleur supplémentaire (16) réalisé en une matière polymère et comprenant un bord de raclage (17).

8. Dispositf de raclage selon l'une des revendication précédentes, caractérisé en ce que les bords de raclage (19) des languettes (9 à 13) sont rectilignes.

9. Dispositif de raclage selon l'une des revendications précédentes, caractérisé en ce qu'une partie du bord de raclage de l'une (9) des languettes a un tracé concave.
